Europäisches Patentamt

European Patent Office

Office européen des brevets

(19)

(11) Veröffentlichungsnummer: **0 180 791**
**A1**

(12) ## EUROPÄISCHE PATENTANMELDUNG

(21) Anmeldenummer: **85112713.4**

(22) Anmeldetag: **08.10.85**

(51) Int. Cl.4: **G01P 5/16 , G01F 1/46**

(30) Priorität: **10.10.84 DE 8429808 U**

(43) Veröffentlichungstag der Anmeldung:
**14.05.86 Patentblatt 86/20**

(84) Benannte Vertragsstaaten:
**AT BE CH DE FR GB IT LI LU NL SE**

(71) Anmelder: **Intra-Automation GmbH Mess- und Rege-**
**linstrumente**
**von Werth-Strasse 11c**
**D-4053 Jüchen 2(DE)**

(72) Erfinder: **Evers, Ernst**
**Jülicher Strasse 49**
**D-4048 Grevenbroich 1(DE)**

(74) Vertreter: **Paul, Dieter-Alfred, Dipl.-Ing.**
**Erftstrasse 82**
**D-4040 Neuss 1(DE)**

(54) **Differentialdruckströmungssonde.**

(57) Eine Differentialdruckströmungssonde zum Einbau in eine ein fluides Medium, insbesondere Rauchgas führende Leitung quer zur Rohrachse, weist ein als Hohlrohr ausgebildetes Staurohr, das auf einer Seite mehrere, über dessen Länge verteilte Stauöffnungen aufweist und deren eines Ende einen Anschluß für ein Meßgerät hat und dessen freies Ende dicht geschlossen gebildet ist, sowie eine Sonde für den statischen Druck auf. Damit bei einer solchen Differential-druckströmungssonde eine einfachere Reinigung möglich ist, weist das freie Ende des Staurohrs (3) zumindest einen entfernbaren Verschluß (29) auf.

EP 0 180 791 A1

## Differentialdruckströmungssonde

Die Erfindung betrifft eine Differentialdruckströmungssonde zum Einbau in eine ein fluides Medium, insbesondere Rauchgas führende Rohrleitung quer zur Rohrachse, mit einem als Hohlrohr ausgebildeten Staurohr, das auf einer Seite mehrere, über dessen Länge verteilte Stauöffnungen aufweist und deren eines Ende einen Anschluß für ein Meßgerät hat und dessen freies Ende dicht geschlossen ausgebildet ist, sowie mit einer Sonde für den statischen Druck.

Eine solche Differentialdruckströmungssonde ist in der DE-PS 1935989 beschrieben. Sie weist ein Staurohr auf, das sich im eingebauten Zustand über die gesamte Breite der Rohrleitung erstreckt. Das Staurohr hat vier gegen die Strömung gerichtete Stauöffnungen über dessen Länge verteilt, so daß sich innerhalb des Staurohres ein gemittelter Gesamtdruck ergibt. Dieser wird mittels eines innerhalb des Staurohrs verlaufenden Interpolierrohrs abgegriffen.

Für den Abgriff des statischen Druckes ist ein parallel zu dem Staurohr verlaufendes Sondenrohr vorgesehen, dessen Öffnung etwa in der Mitte des Strömungsquerschnittes liegt und stromabwärts gerichtet ist.

Die Differentialdruckströmungssonde wird bei der Montage durch eine Öffnung der Rohrleitung hindurchgesteckt und in der Öffnung mittels einer Muffe oder eines Flansches befestigt. Das freie Ende des Staurohrs ist geschlossen ausgebildet und geht bis zur gegenüberliegenden Wandung der Rohrleitung. In einer besonderen Ausführungsform ist das Staurohr am freien Ende in einer Lagerbuchse geführt, die in einer dort vorhandenen Öffnung in der Rohrleitung eingeschraubt ist.

Solche Differentialdruckströmungssonden verschmutzen insbesondere beim Einsatz in Rauchgasleitungen relativ schnell und müssen deshalb in regelmäßgen Abständen gereinigt werden. Bei den bekannten Ausführungsformen muß hierfür die komplette Sonde ausgebaut und auseinandergenommen sowie anschließend wieder eingebaut werden. Dies bedingt einen hohen Montageaufwand und meist auch eine Betriebsunterbrechung.

Der Erfindung liegt deshalb die Aufgabe zugrunde, eine Differentialdruckströmungssonde der eingangs genannten Art so zu gestalten, daß ihre Reinigung einfacher ist.

Diese Aufgabe wird erfindungsgemäß dadurch gelöst, daß das freie Ende des Staurohrs zumindest einen entfernbaren Verschluß, insbesondere einen Schraubverschluß, aufweist.

Durch diese Ausbildung hat man nach Entfernen des Verschlusses eine Zugangsmöglichkeit vom freien Ende des Staurohrs her, so daß das Staurohr ohne Zerlegung der Differentialdruckströmungssonde auf einfache Weise gereinigt werden kann. Sofern die dem freien Ende der Staursonde benachbarte Rohrwandung zusätzlich eine Öffnung mit einem entfernbaren Verschluß aufweist, kann das Staurohr sogar ohne Demontage der Differentialdruckströmungssonde gereinigt werden.

In Ausbildung der Erfindung ist vorgesehen, daß der Verschluß in einer in das Staurohr eingesetzten Verschlußplatte angeordnet ist. Zeckmäßigerweise ist dann über der Verschlußplatte ein weiterer, mit einem Dichtring versehener Schraubverschluß angeordnet, damit dieses Ende des Staurohrs völlig dicht abgeschlossen werden kann.

in weiterer Ausbildung der Erfindung ist vorgesehen, daß die Sonde für den statischen Druck aus einem über die gesamte Länge des Staurohrs sich erstreckendes, mit zumindest einer Druckentnahmeöffnung versehenes Sondenrohr besteht, deren freies Ende ebenfalls mit einem entfernbaren Verschluß versehen ist. Zweckmäßigerweise ist das Sondenrohr innerhalb des Staurohrs angeordnet. Sofern das Staurohr eine Verschlußplatte aufweist, sollte dann das Sondenrohr bis zu dieser Platte gehen und dort einen eigenen Verschluß haben. Mit dieser Ausführung Kann zugleich mit dem Staurohr auch das Sondenrohr für den stati schen Druck vom freien Ende her gesäubert werden.

Das Staurohr und gegebenenfalls das Sondenrohr sollten über ihre gesamte Länge einen gleichbleibenden inneren Querschnitt haben, um die Säuberung zu erleichtern.

In weiterer Ausgestaltung der Erfindung ist vorgesehen, daß das Staurohr mit seinem freien Ende teleskopartig in einer an der Rohrleitung befestigbaren Lagerbuchse geführt ist. Diese ist zweckmäßigerweise an einem Flanschstück gehalten, das außenseitig an der Rohrleitung befestigbar ist und damit die Möglichkeit eröffnet, das Staurohr und gegebenenfalls auch das Sondenrohr in eingebautem Zustand von dieser Seite aus zu reinigen. Das Flanschstück ist zweckmäßigerweise mit einem Flanschdeckel abdichtend verschlossen.

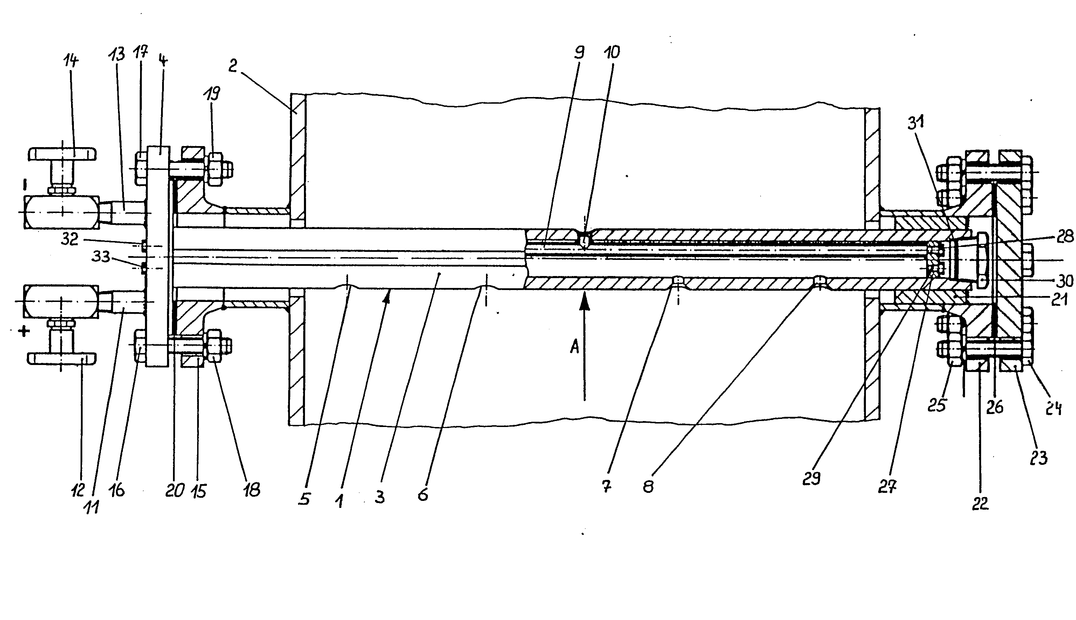

In der Zeichnung ist die Erfindung an Hand eines Ausführungsbeispiels näher veranschaulicht. Sie zeigt eine Differentialdruckströmungssonde 1 teilweise im Querschnitt, die in einer ebenfalls im Querschnitt dargestellten Rohrleitung 2 eingebaut ist. Die Strömungsrichtung innerhalb der Rohrleitung 2 wird durch den Pfeil A angegeben, geht also in der Zeichnungsebene von unten nach oben.

Die Differentialdruckströmungssonde hat ein Staurohr 3, dessen in dieser Ansicht linkes Ende an einer Flanschplatte 4 befestigt ist. Das Staurohr 3 hat achteckigen Querschnitt und ist innen hohl ausgebildet. An der gegen die Strömung (Pfeil A) gerichteten Seite weist das Staurohr 3 vier Stauöffnungen 5, 6, 7, 8 auf, die so angeordnet sind, daß sie den Rohrquerschnitt jeweils in vier gleich große Flächensegmente aufteilen. Auf diese Weise stellt sich innerhalb des Staurohres 3 ein Mittelwert des Gesamtdrukkes ein, der den Abfall der Strömungsgeschwindigkeit im Wandbereich der Rohrleitung 2 und damit das Strömungsprofil berücksichtigt.

Innerhalb des Staurohres 3, und zwar an der der Stauöffnungen 5, 6, 7, 8 abgewandten Seite, verläuft parallel ein Sondenrohr 9 für die Erfassung des statischen Druckes. In der Mitte weisen das Sondenrohr 9 und das Staurohr 3 eine Druckentnahmeöffnung 10 auf, die in Strömungsrichtung (Pfeil A) gerichtet ist. Diese Druckentnahmeöffnung 10 hat nur Verbindung zu dem Sondenrohr 9, ist also gegenüber dem Innenrohr des Staurohrs 3 abgedichtet.

Der Innenraum des Staurohrs 3 steht über einen hier nicht näher dargestellten, durch die Flanschplatte 4 und einen Stutzen 11 gehenden Kanal mit einem Handventil 12 in Verbindung, während der Innenraum des Sondenrohrs 9 ebenfalls über einen in der Flanschplatte 4 und einen Stutzen 13 verlaufenden Kanal mit dem Handventil 14 verbunden ist. An diese Handventile 12, 14 können dann Wirkdruckleitungen zu einem Meßgerät bzw. zu einem Meßumformer angeschlossen werden. Dort werden dann in üblicher Weise der am Handventil 14 wirkende statische Druck von dem am Handventil 12 wirkenden Gesamtdruck abgezogen. Aus dem sich dabei ergebenden dynamischen Druck läßt sich dann die Geschwindigkeit des Strömungsmediums in der Rohrleitung 2 und bei Berücksichtigung der Querschnittsfläche auch der Volumenstrom berechnen.

2

Die Differentialdruckströmungssonde 1 wird bei der Montage durch einen auf die Außenseite der Rohrleitung 2 aufgeschweißten Flanschstutzen 15 gesteckt. Mit diesem Flanschstutzen 15 wird die Flanschplatte 4 über Schrauben 16, 17 und Muttern 18, 19 befestigt, wobei zwischen beiden Teilen eine Dichtringscheibe 20 gelegt ist.

An seinem freien Ende ist das Staurohr 3 in einer Gleitbuchse 21 geführt, die axiale Längenänderungen des Staurohrs 3 infolge Temperaturänderungen zuläßt. Die Gleitbuchse 21 ist in einem auf die Außenseite der Rohrleitung 2 aufgeschweißten Flanschstutzen 22 gehalten, dessen Öffnung durch einen Flanschdeckel 23 geschlossen ist. Hierzu ist der Flanschdeckel 23 über eine Vielzahl von Schrauben und Muttern, beispielhaft durch 24 und 25 angezeigte, unter Zwischenlage einer Dichtringscheibe 26 an dem Flanschstutzen 22 befestigt.

In die am freien Ende befindliche Öffnung des Staurohrs 3 ist eine Verschlußplatte 27 eingesetzt, die zwei Schraubverschlüsse 28, 29 aufweist. Über den in dieser Ansicht unteren Schraubverschluß 29 kann man Zugang zu dem Innenraum des Staurohrs 3 erhalten, während der obere Schraubverschluß 28 für den Zugang zu dem Sondenrohr 9 bestimmt ist. Hierzu ist das Sondenrohr 9 abdichtend bis an die Verschlußplatte 27 herangeführt. Auf das Ende des Staurohrs 3 ist dann noch eine Abdichtschraube 30 mit einem Dichtring 31 eingeschraubt.

Für die Reinigung des Innenraums des Staurohrs 3 und des Sondenrohrs 9 werden zunächst der Flanschdeckel 23 abmontiert, die Abdichtschraube 30 entfernt und die Schraubverschlüsse 28, 29 herausgeschraubt. Durch die dann vorhandenen Öffnungen in der Verschlußplatte 27 können dann mechanische Reinigungsgeräte eingeführt werden, mit denen sich Ablagerungen entfernen lassen.

Um das Staurohr 3 und das Sondenrohr 9 von beiden Seiten reinigen zu können, sind in der Flanschplatte 4 entsprechende Öffnungen vorgesehen, die mit Schraubverschlüssen 32, 33 versehen sind. Diese zusätzliche Anordnung empfiehlt sich insbesondere bei sehr langen Staurohren.

**Ansprüche**

1. Differentialdruckströmungssonde zum Einbau in eine ein fluides Medium, insbesondere Rauchgas führende Leitung quer zur Rohrachse, mit einem als Hohlrohr ausgebildeten Staurohr, das auf einer Seite mehrere, über dessen Länge verteilte Stauöffnungen aufweist und deren eines Ende einen Anschluß für ein Meßgerät hat und dessen freies Ende dicht geschlossen ausgebildet ist, sowie mit einer Sonde für den statischen Druck, dadurch gekennzeichnet, daß das freie Ende des Staurohrs (3) zumindest einen entfernbaren Verschluß (29) aufweist.

2. Differentialdruckströmungssonde nach Anspruch 1, dadurch gekennzeichnet, daß der Verschluß bzw. die Verschlüsse jeweils ein Schraubenverschluß (29) ist bzw. sind.

3. Differentialdruckströmungssonde nach Anspruch 1 oder 2, dadurch gekennzeichnet, daß der Verschluß bzw. die Verschlüsse in einer in das Staurohr (3) eingesetzten Verschlußplatte (27) angeordnet ist bzw. sind.

4. Differentialdruckströmungssonde nach Anspruch 3, dadurch gekennzeichnet, daß über der Verschlußplatte (27) ein weiterer, mit einem Dichtring (31) versehener Schraubverschluß (30) angeordnet ist.

5. Differentialdruckströmungssonde nach einem der Ansprüche 1 bis 4, dadurch gekennzeichnet, daß die Sonde für den statischen Druck aus einem über die gesamte Länge des Staurohrs (3) sich erstreckendes, mit zumindest einer Druckentnahmeöffnung (10) versehenes Sondenrohr (9) besteht, deren freies Ende ebenfalls mit einem entfernbaren Verschluß (28) versehen ist.

6. Differentialdruckströmungssonde nach Anspruch 5, dadurch gekennzeichnet, daß das Sondenrohr (9) innerhalb des Staurohrs (3) angeordnet ist.

7. Differentialdruckströmungssonde nach Anspruch 3 oder 4 und Anspruch 6, dadurch gekennzeichnet, daß das Sondenrohr (9) bis zur Verschlußplatte (27) geht und dort einen eigenen Verschluß (28) hat.

8. Differentialdruckströmungssonde nach einem der Ansprüche 1 bis 7, dadurch gekennzeichnet, daß das Staurohr (3) und gegebenenfalls das Sondenrohr (9) über seine gesamte Länge gleichbleibenden inneren Querschnitt hat bzw. haben.

9. Differentialdruckströmungssonde nach einem der Ansprüche 1 bis 8, dadurch gekennzeichnet, daß das Staurohr (3) mit seinem freien Ende teleskopartig in einer an der Rohrleitung (2) befestigbaren Lagerbuchse (21) geführt ist.

10. Differentialdruckströmungssonde nach Anspruch 9, dadurch gekennzeichnet, daß die Lagerbuchse (21) in einem Flanschstück (22) gehalten ist, das aussenseitig an der Rohrleitung (2) befestigbar ist.

11. Differentialdruckströmungssonde nach Anspruch 10, dadurch gekennzeichnet, daß das Flanschstück (22) mit einem Flanschdeckel (23) abdichtend verschlossen ist.

0 180 791

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | PATENTS ABSTRACTS OF JAPAN, Band 8, Nr. 159 (P-289) [1596], 24. Juli 1984; & JP - A - 57 117 (SHIN NIPPON SEITETSU K.K.) 02-04-1984 | 1,8,9 | G 01 P 5/16 G 01 P 1/46 |
| A | Idem | 6 | |
| D,Y | DE-A-1 935 989 (P.D. DIETERICH) * Figuren 1,9; Seite 10, Zeile 28 - Seite 12, Zeile 25; Seite 19, Zeile 24 - Seite 20, Zeile 16 * | 1-3,5 | |
| Y | DE-A-2 245 553 (GOSUDARSTWENNY NAUTSCHNO-ISSLEDOWATELSKIJ INSTITUT PO PROMYSCHLENNOI I SANITARNOI OSCHISTKE GASOW) * Figuren 2,3; Seite 5, Zeile 17 - Seite 6, Zeile 17 * | 1-3,5 | |
| A | | 7 | RECHERCHIERTE SACHGEBIETE (Int Cl.4) G 01 P G 01 F G 01 N |
| A | FR-A- 365 017 (J.A. COLE et al.) * Figur 3 * | 1,2,5 | |
| A | US-A-1 446 618 (W.S. DARLEY) * Figuren 1,2; Seite 1, Zeilen 33-74 * | 1 | |

Der vorliegende Recherchenbericht wurde für alle Patentansprüche erstellt.

| Recherchenort DEN HAAG | Abschlußdatum der Recherche 15-01-1986 | Prüfer PENZKOFER,B. |
|---|---|---|